# EUROPEAN PATENT APPLICATION

(11) **EP 1 598 988 A1**
(43) Date of publication of application: **23.11.2005**
(21) Application number: 03707138.8
(22) Date of filing: 27.02.2003
(51) Int. Cl.: H04L 12/56

(54) **COMMUNICATION CHARGE SORTING METHOD AND DEVICE**

(71) Applicant: FUJITSU LIMITED, Kawasaki-shi, Kanagawa 211-8588 (JP)
(72) Inventor: MIYAMOTO, Satoshi, c/o FUJITSU LIMITED, Kawasaki-shi, Kanagawa 211-8588 (JP); OSAKA, Yoshimichi, c/o FUJITSU HIGASHI-HOKKAIDO, Obihiro-shi, Hokkaido 080-00 (JP)
(74) Representative: Sunderland, James Harry
(86) International application number: PCT/JP2003/002251
(87) International publication number: WO 2004/077765

(57) **Abstract**

A communication charge dividing method according to the invention includes: a step of counting a first number of packets, which is a number of packets for a specific user in a communication path through which both packets regarded as packets for business use and packets regarded as packets for private use pass; a step of counting a second number of packets, which is a number of packets for the specific user in a communication path through which only the packets regarded as packets for business use pass; a step of calculating a ratio of packets for business use and a ratio of packets for private use on the basis of the first number of packets and the second number of packets; and a step of calculating a communication charge for business use and a communication charge for private use on the basis of the calculated ratio of packets for business use and the calculated ratio of packets for private use and data concerning a communication charge for the specific user. Thus, without maintaining distinguishing data for business use and private use with respect to access destination URL and the like, it is possible to divide the communication charges into the charges for business use and the charges for private use by a simple processing.

## Description

### [Technical Field]

The present invention relates to a data communication management technique, more particularly to a technique for dividing communication charges into a communication charge for business use and a communication charge for private use.

### [Background Technology]

In accordance with a reduction in size, a reduction in price, and an increase in performance of terminals such as a personal computer and a Personal Digital Assistant (PDA), companies are actively improving mobile environments for the purpose of business use. However, a burden to monthly communication charges, in particular, an increase in communication charges due to private use of the terminals and networks causes a large problem for the companies.

Under such circumstances, some communication carriers offer services to calculate a communication charge for business use and a communication charge for private use separately by providing a telephone number of an access point for business use and a telephone number of an access point for private use separately. However, in general, when there is only one telephone number of an access point, communication for business use and communication for private use are mixed during time connecting to the access point. Therefore, in the existing communication charge separating service, it is impossible to divide communication charges into a communication charge for business use and a communication charge for private use.

In addition, for example, International Publication WO0/78317 (whose counterpart application is Japanese Patent No. 3327918) discloses a technique described below. Specifically, the technique is a data charging method of charging for a communication charge according to an amount of data on an information network that a user has sent and received using an information communication terminal. In the data charging method, when data is sent and received through a network segment set in the information network, first address information specifying information resources on the information network, which is generated when the user sends and receives data, is updated dynamically so as to include second address information specifying the network segment set in the information network to cause the user to send and receive the data. In addition, an amount of the data is classified and totaled for each purpose of use of the data in the network segment. Public and private distinguishing information for distinguishing personal use of the user from business use in an organization, to which the user belongs, as a purpose of use is set for the first address information specifying information resources. The amount of the data is accumulated separately for the user and the organization on the basis of the public and private distinguishing information to charge the user and the organization for communication separately. The technique disclosed in this publication assumes a communication charge of a packet communication type, but does not take into account a communication charge of a circuit switching type. In addition, for example, because data is caused to be transmitted and received through the specific network segment, a load at the time of communication such as dynamically updating the address information is large. Further, because the public and private distinguishing information (Uniform Resource Locator (URL), etc.) for judging whether or not it is business use has to be prepared, a processing load is large in that it is necessary to compare with the public and private distinguishing information, and a management load is large in that the public and private distinguishing information has to be managed appropriately.

### Patent Document 1

### International Publication WO01/7831

### [Summary of the Invention]

Therefore, an object of the invention is to provide a new technique to divide communication charges into a communication charge for business use and a communication charge for business use.

In addition, another object of the invention is to provide a technique to divide communication charges into a communication charge for business use and a communication charge for private use without carrying out unnecessary processing and management.

Furthermore, still another object is to provide a technique to divide, when connection of a circuit switching type is performed, communication charges for the connection into a communication charge for business use and a communication charge for private use.

A method for dividing communication charges into a communication charge for business use and a communication charge for private use according to the invention includes: a step of counting a first number of packets, which is the number of packets regarded as packets for business use and packets for private use for a specific user, and storing the first number of packets in a storage device; a step of counting a second number of packets, which is the number of packets regarded as packets for business use for the specific user, and storing the second number of packets in the storage device; a ratio calculation step of calculating at least one of a ratio of packets for business use and a ratio of packets for private use on the basis of the first number of packets and the second number of packets and storing a calculation result in the storage device; and a charge calculation step of calculating at least one of a communication charge for business use and a communication charge for private use on the basis of at least one of the calculated ratio of packets for business use and the calculated ratio of packets for private use and data concerning a communication charge for the specific user and storing a result of the calculation in the storage device.

When the first number of packets, which is a total number of packets for the specific user, and the second number of packets, which is the number of packets regarded as packets for business use for the specific user, are counted in this way, it is possible to calculate a ratio of packets for business use and a ratio of packets for private use. Therefore, this makes it possible to divide communication charges into a communication charge for business use and a communication charge for private use in proportion.

Incidentally, the invention can be applied to a connection system of a so-called circuit switching type in which a communication charge for a specific user is determined according to time from start of communication to end of the communication.

Further, the aforementioned first number of packets maybe counted in a communication path through which both the packets regarded as packets for business use and the packets regarded as packets for private use pass. The second number of packets may be counted in a communication path through which only the packets regarded as packets for business use pass. This makes it unnecessary to specifically manage a table for distinguishing access destinations and specifically change a path of data communication on a network.

In addition, the invention may further include: a step of associating the first number of packets and a user ID by using an IP address on the user side and time data, which are stored in the storage device in association with the first number of packets, and time data, an IP address on the user side and a user ID, which are included in charging logs generated at the time of connection and at the time of disconnection; and a step of associating the second number of packets and the user ID by using an IP address on the user side and time data, which are stored in the storage device in association with the second number of packets, and time data, the IP address on the user side and the user ID, which are included in the charging logs.

Furthermore, the invention may further include: a step of acquiring data on a communication charge by each telephone number; and a step of associating the data on a communication charge with the user ID by using user information including a telephone number and the user ID and the data on the communication charge by each telephone number.

In addition, the aforementioned ratio calculation step may include: a step of totaling the first number of packets for the specific user during a specific connection time from connection to disconnection; a step of totaling the second number of packets for the specific user during the specific connection time from the connection to the disconnection; and a step of calculating, for every connection time, at least one of a ratio of packets for business use and a ratio of packets for private use by using the totaled first number of packets and the totaled second number of packets.

Furthermore, the aforementioned charge calculation step may include: a step of acquiring data concerning a communication charge for every specific connection time from the connection to the disconnection and for each specific user; and a step of calculating at least one of a communication charge for business use and a communication charge for private use on the basis of at least either the ratio of packets for business use or the ratio of packets for private use, which corresponds to the specific connection time and the specific user, and the data concerning the communication charge.

Incidentally, the aforementioned method can be executed, and a program for that are stored in a storage medium or a storage device such as, for example, a flexible disk, a CD-ROM, a magneto-optical disk, a semiconductor memory, or a hard disk. Besides, the program may be distributed in digital signals through a network. Incidentally, the intermediate processing result is temporarily stored in a storage device such as a memory.

### [Brief-description of the drawings]

Fig. 1 is a schematic diagram of a system according to an embodiment of the invention;
Fig. 2 is a diagram showing an example of data stored in an authentication database (DB);
Fig. 3 is a diagram showing an example of data stored in a user DB;
Fig. 4 is a flowchart of a processing flow according to the embodiment of the invention;
Fig. 5 is a diagram showing an example of data stored in a charging log storage;
Figs. 6A and 6B are diagrams showing examples of data stored in a total request packet DB;
Figs. 7A and 7B are diagrams showing examples of data stored in a business use request packet DB;
Fig. 8 is a flowchart of an example of a processing flow of a totaling processing;
Fig. 9 is a diagram representing a state after a processing of the data stored in the charging log storage;
Fig. 10 is a diagram showing an example of data stored in a business and private use ratio DB;
Fig. 11 is a diagram showing an example of call details data; and
Fig. 12 is a table showing an example of data stored in a use details data storage.

### [Best mode for carrying out the invention]

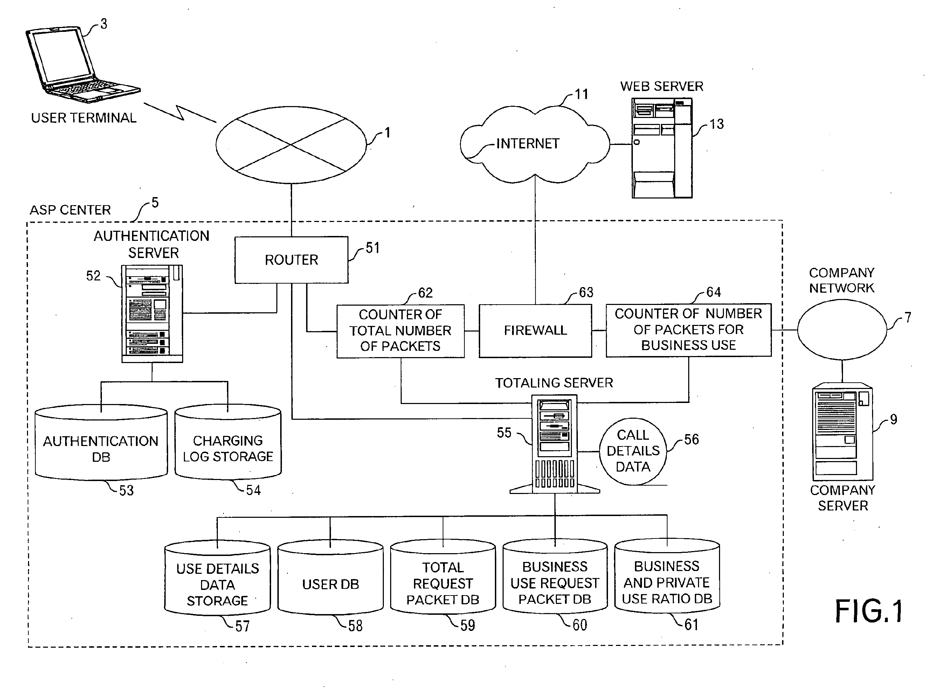

Fig. 1 shows a schematic diagram of a system according to an embodiment of the invention. For example, one or plural user terminals 3 such as personal computers operated by company employees make connection to a public network 1 through, for example, radio communication. The user terminal 3 may be a terminal such as a PDA or a cellular phone (including a personal Handy phone System (PHS) terminal). Moreover, the user terminal 3 has a Web browser function and a mailer function and can perform browsing of Web pages, and transmission and reception of emails. An Application Service Provider (ASP) center 5 is connected to the public network 1 at an access point corresponding to a predetermined telephone number. A company employee operates the user terminal 3 to cause the user terminal 3 to call the access point and makes connection to a computer connected with the Internet 11 or a company network 7. In the ASP center 5, a communication device such as a router 51 is provided to communicate with the user terminal 3 connected to the public network 1 side. The router 51 is connected to an authentication server 52 that carries out a processing such as an authentication processing for access to the ASP center 5, allocation of IP addresses, and registration of charging logs. When the user terminal 3 calls the access point, the router 51 always connects the user terminal 3 to the authentication server 52. The authentication server 52 manages an authentication database (DB) 53, in which data on an ID and a password used in the authentication is registered, and a charging log storage 54 for registering charging logs. In addition, the router 51 is connected to a counter 62 of the total number of packets, which counts the number of packets every predetermined time in association with an IP address. The counter 62 of the total number of packets is connected to a firewall 63. The firewall 63 is connected to the Internet 11 and a counter 64 of the number of packets for business use, which counts the number of packets every predetermined time in association with an IP address. The counter 64 of the number of packets for business use is connected to the company network 7 through, for example, a private line. One or plural company servers 9 are connected to the company network 7. The company server 9 is a mail server, a Web server, or the like. A large number of servers such as various Web servers 13 and not-shown mail servers are connected to the Internet 11.

The counter 62 of the total number of packets is provided on a communication path through which both packets generated by communication for private use (e.g., communication with the Web server 13 or the like on the Internet 11) and packages generated by communication for business use (communication with the company server 9 or the like connected to the company network 7) pass when the user terminal 3 operated by a specific company employee accesses the ASP center 5. On the other hand, the counter 64 of the number of packets for business use is provided on a communication path through which only packets generated by communication for business uses pass when the user terminal 3 operated by the specific company employee accesses the ASP server 5. In other words, the counter 64 of the number of packets for business use is provided immediately before the company network 7.

Incidentally, the counter 62 of the total number of packets and the counter 64 of the number of packets for business use periodically output counting results to a totaling server 55. This is preferable for minimizing loss of the counting results even when failures occur in the counter 62 of the total number of packets and the counter 64 of the number of packets for business use.

The router 51 is further connected to the totaling server 55, which carries out a main processing in this embodiment. The totaling server 55 is connected to the counter 62 of the total number of packets and the counter 64 of the number of packets for business use through, for example, a not-shown network in the ASP center 5. A drive device for a recording medium such as a magnetic tape is connected to or incorporated in the totaling server 55 such that the totaling server 55 can read call details data 56. In addition, it manages a use details data storage 57 that stores data concerning communication charges for business use and private use, a user DB 58 that stores data concerning a user, a total request packet DB 59 that stores data concerning the total number of packets, a business use request packet DB 60 that stores data concerning the number of packets for business use, and a business and private use ratio DB 61 that stores data concerning a ratio of packets for business use and a ratio of packets for private use for every communication time.

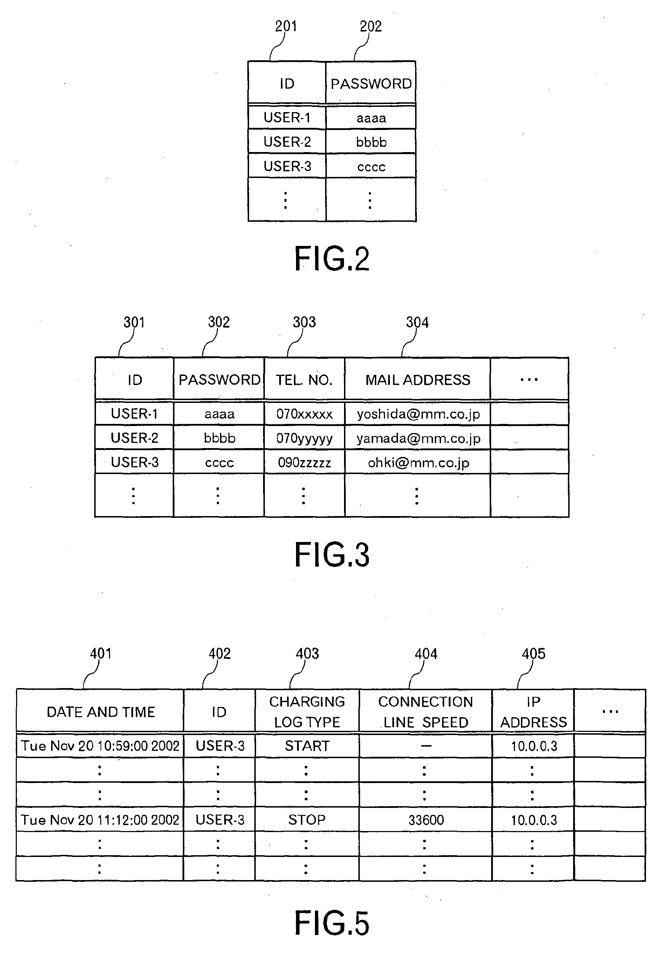

Fig. 2 shows an example of data stored in the authentication DB 53. In the example in Fig. 2, an ID column 201 and a password column 202 are provided. Incidentally, data stored in the authentication DB 53 is registered from a not-shown administrator terminal.

Fig. 3 shows an example of data stored in the user DB 58. In the example in Fig. 3, an ID column 301, a password column 302, a column 303 for a user's telephone number used in access, an email address column 304, and the like are provided. The data shown in Fig. 3 is registered from the not-shown administrator terminal. Incidentally, in this embodiment, an email address is not used directly but is used when an administrator makes contact with a user.

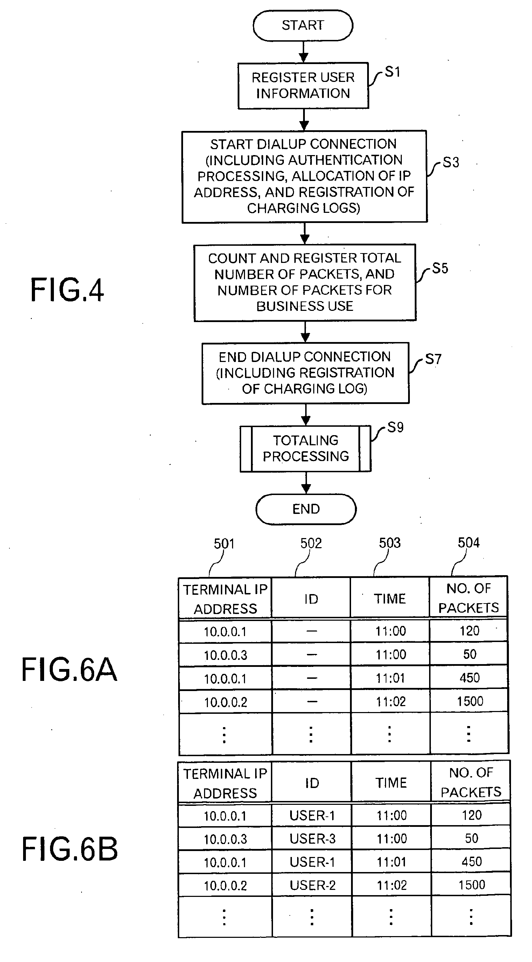

Processing contents of the system shown in Fig. 1 will be hereinafter explained with reference to Figs. 4 to 12. As described above, first, as pre-processing, an administrator of the ASP center 5 registers a pair of an ID and a password in the authentication DB 53 and registers user information such as an ID, a password, a telephone number, and an email address in the user DB 58 from the not-shown administrator terminal (step S1 in Fig. 4). Thereafter, a specific company employee operates the user terminal 3 to start dialup connection (step S3). In other words, the user terminal 3 calls a predetermined access point. In response to this call, the authentication server 52 of the ASP center 5 carries out the authentication processing using the authentication DB 53. The authentication server 52 searches the authentication DB 53 by using the received ID from the received ID and password and reads out a password corresponding to the ID. Then, it compares the received password and the read password and judges whether the passwords coincide with each other. When the authentication is successful, it allocates an IP address to the user terminal 3 and notifies the user terminal 3 of the allocated IP address. Further, the authentication server 52 registers a charging log for communication start in the charging log storage 54. In the case of failure of the authentication, for example, it disconnects a line.

Fig. 5 shows an example of data stored in the charging log storage 54. In the example in Fig. 5, a date and time column 401, an ID column 402, a charging log type column 403, a communication line speed column 404, an IP address column 405, and the like are provided. When dialup connection is started, a record shown in a first line is registered. In other words, a date and time (Tuesday, November 20, 2002, 10:59:00), START representing start as a charging log type, an ID (USER-3), an IP address (10.0.0.3), and the like are registered. Incidentally, because the connection line speed is data that cannot be acquired at the time of start of dialup connection, the connection line speed is not registered.

The user terminal 3, to which the IP address is allocated, can access the Web server 13 on the Internet 11 and can access the company server 9 connected to the company network 7 through the firewall 63. At that time, a packet requesting, for example, Web page data, which is transmitted from the user terminal 3, passes through the counter 62 of the total number of packets. Web page data transmitted from the Web server also passes through the counter 62 of the total number of packets. This Web page data passes through the counter 62 of the total number of packets even if the Web page data is Web page data on the Web server 13 connected to the Internet 11 or Web page data on the company server 9 that is, for example, a Web server. In this embodiment, when data is transmitted to and received from the Internet 11, packets are regarded as packets for private use. When data is transmitted to and received from the company network 7, packets are regarded as packets for business use. Therefore, the counter 62 of the total number of packets counts all the packets for business use and the packets for private use (step S5). Incidentally, the counter 62 of the total number of packets counts packets, which pass the counter 62 of the total number of packets in a predetermined time (e.g., one minute), in association with an IP address of the user terminal 3. The counter 62 of the total number of packets notifies the totaling server 55 of data including the IP address of the user terminal 3, the number of packets, which have passed through the counter 62 of the total number of packets, and time of the passage every predetermined time. The totaling server 55 registers the data including the IP address, the number of packets and the time, which is received from the counter 62 of the total number of packets, in the total request packet DB 59.

In addition, when the user terminal 3 accesses the company server 9 connected to the company network 7, a packet transmitted from the user terminal 3, which requests, for example, Web page data from the company server 9, passes through the counter 64 of the number of packets for business use as well as the counter 62 of the total number of packets. The web page data transmitted from the company server 9 also passes through the counter 64 of the number of packets for business use as well as the counter 62 of the total number of packets. Therefore, the counter 64 of the number of packets for business use counts packets that are regarded as packets for business use (step S5). Incidentally, the counter 64 of the number of packets for business use counts packets, which have passed the counter 64 of the number of packets for business use in a predetermined time (e.g., one minute), in association with the IP address of the user terminal 3. The counter 64 of the number of packets for business use notifies the totaling server 55 of data including the IP address of the user terminal 3, the number of packets, which have passed through the counter 64 of the number of packets for business use, and time of the passage every predetermined time. The totaling server 55 registers the data including the IP address, the number of packets and the time, which is received from the counter 64 of the number of packets for business use, in the business use request packet DB 60.

Fig. 6A shows an example of data registered at certain timing in the total request packet DB 59. In the example in Fig. 6A, a terminal IP address column 501, an ID column 502, a time column 503, and a column 504 for the number of packets are provided. Incidentally, because an ID specified in a processing described later is registered in the ID column 502, an ID is not included in data from the counter 62 of the total number of packets. Thus, the ID is not registered at this stage. For example, in a record in a second line, the number of packets transmitted and received to and from a terminal IP address 10.0.0.3 from time 10:59 to 11:00 is fifty.

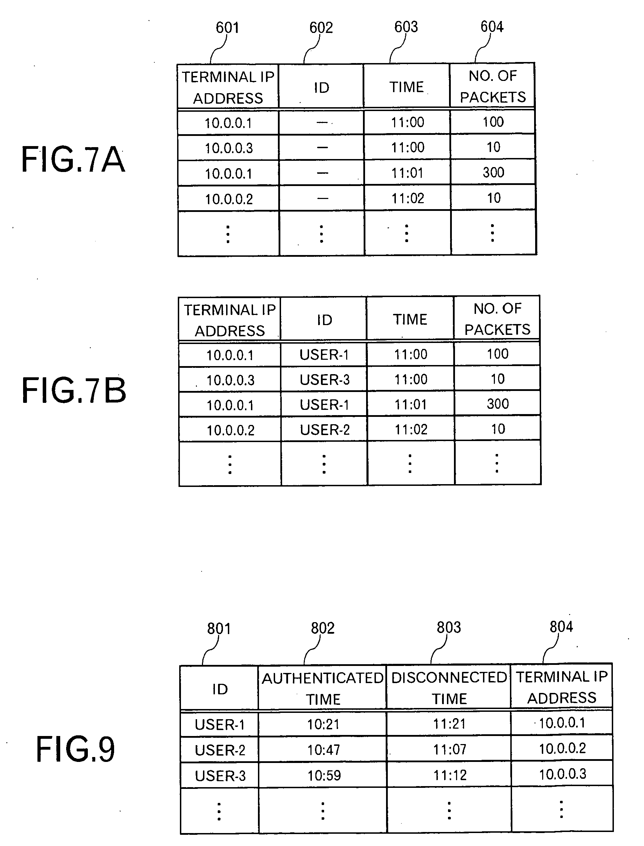

Fig. 7A shows an example of data registered at certain timing in the business use request packet DB 60. In the example in Fig. 7A, a terminal IP address column 601, an ID column 602, a time column 603, and a column 604 for the number of packets are provided. Incidentally, because an ID specified in processing described below is registered in the ID column 602, an ID is not included in the data from the counter 64 of the number of packets for business use. Thus, the ID is not registered at this stage. For example, in a record in a second line, the number of packets transmitted and received to and from a terminal IP address 10.0.0.3 from time 10:59 to 11:00 is ten.

The counter 62 of the total number of packets, the counter 64 of the number of packets for business use, and the totaling server 55 repeat the aforementioned processing to accumulate data in the total request packet DB 59 and the business use request packet DB 60 every predetermined time.

Thereafter, for example, when the user terminal 3 disconnect the line according to an instruction of the specific company employee or the like, the authentication server 52 carries out a processing to end the dialup connection (step S7). That is, the authentication server 52 registers a charging log at the end of the connection in the charging log storage 54. In Fig. 5, a record shown in a fourth line is registered. In other words, a date and time (Tuesday, November 20, 2002, 11:12:00), STOP representing end, an ID (USER-3), connection line speed (33600 bps), an IP address (10.0.0.3), and the like are registered. The connection line speed is included in the charging log at the end of the connection.

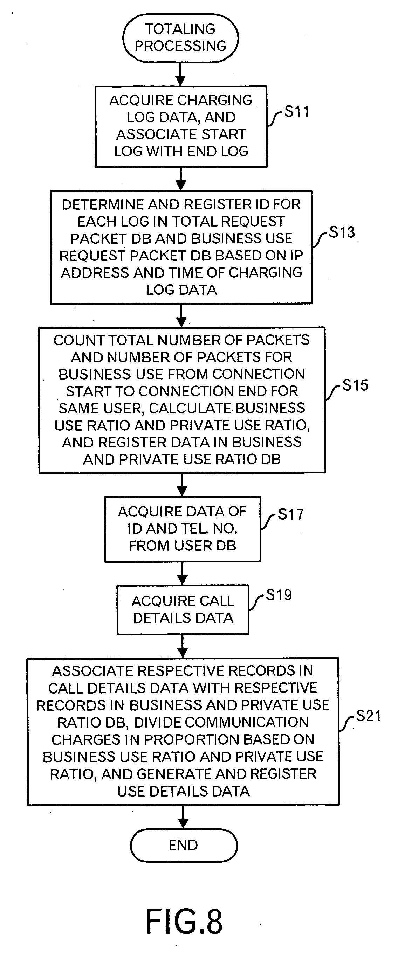

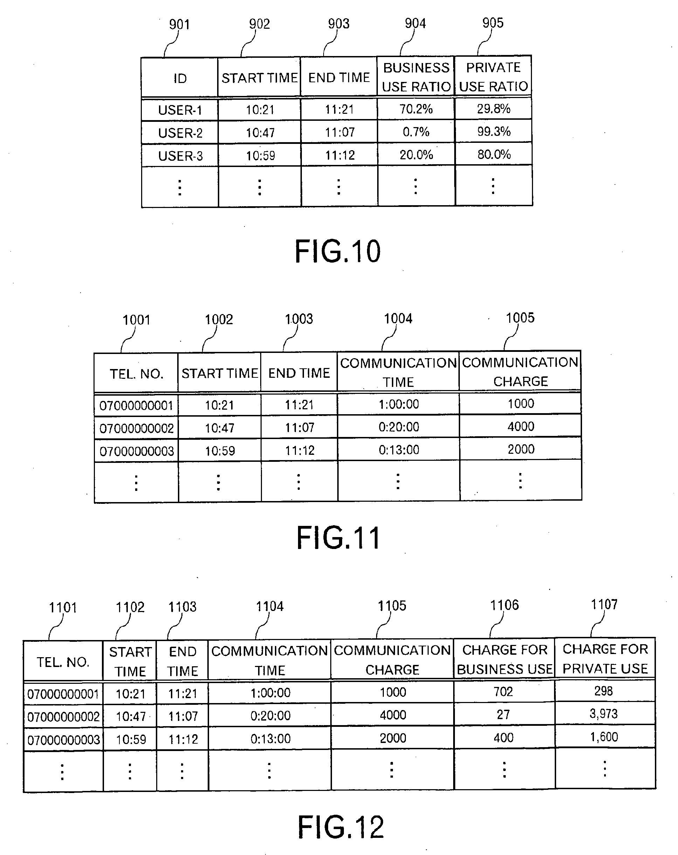

The processings in the steps S3 to S7 are repeated for a predetermined period (e.g., one month) and the totaling server 55 carries out a totaling processing (step S9) . This totaling processing is carried out, for example, at timing when it receives the call details data 56 from a communication carrier. However, the timing s not limited to such timing. For example, it may be carried out at arbitrary timing according to an instruction of the administrator of the ASP center 5. The totaling server 55 carries out a processing in Fig. 8 as the totaling processing. First, the totaling server 55 acquires charging log data for the predetermined period, which is stored in the charging log storage 54 from the authentication server 52, associates a start log and an end log using the user ID, the IP address, and the data on a charging log type, and stores a result of the processing in, for example, a main memory of the totaling server 55 (step S11) . For example, the totaling server 55 generates data shown in Fig. 9 and stores the data. In the example in Fig. 9, an ID column 801, an authenticated time column 802 representing start of connection, a disconnected time column 803 representing end of the connection, and a terminal IP address column 804 are included. This makes it possible to judge a user of which user ID used a specific terminal IP address from the authenticated time to the disconnected time.

Next, the totaling server 55 determines user IDs for respective records of the total request packet DB 59 and the business use request packet DB 60 on the basis of the IP address and the time (the authenticated time and the disconnected time) of the charging log data and registers the user IDs in the total request packet DB 59 and the business use request packet DB 60 (step S13) . For example, it is seen that, as shown in a third line in Fig. 9, because the terminal IP address 10.0.0.3 was used by a user with a user ID of USER-3 from 10:59 to 11:12, a record in a second line in Fig. 6A, which is a log for the time 11:00 and the terminal IP address 10.0.0.3, is a record of use by the user with the user ID of USER-3. Similarly, judging from a relation among the authenticated time, the disconnected time, and the terminal IP address, a terminal IP address 10.0.0.1 around 11:00 is a log of the user with the user ID of USER-1 and a terminal IP address 10.0.0.2 is a log of the user with the user ID of USER-2. In this way, user IDs are registered in the ID column 502 of the table in Fig. 6A. Fig. 6B shows a state after the user IDs are registered. Such a processing is applied to not only the total request packet DB 59 but also the business use request packet DB 60, whereby user IDs are registered in the ID column 602 of the table in Fig 7A. Fig. 7B shows a state after the user IDs are registered.

Then, the totaling server 55 counts the total number of packets and the number of packets for business use from the start of the connection to the end of the connection for an identical user, calculates a ratio of packets for business use and a ratio of packets for private use, and registers them in the business and private use ratio DB 61 (step S15) . For example, in the table shown in Fig. 6B, the totaling server 55 sorts records according to values of the ID column 502 and adds the numbers of packets in the records from the authenticated time to the disconnected time shown in Fig. 9, which are records for the same user ID. Similarly, in the table shown in Fig. 7B, the totaling server 55 sorts records with values of the ID column 602 and adds the numbers of packets in the records from the authenticated time to the disconnected time shown in Fig. 9, which are records for the same user ID. The former number of packets is the total number of packets and the latter number of packets is the number of packets for business use. Therefore, the number of packets for private use is calculated as (the total number of packets - the number of packets for business use). The ratio of packets for business use is calculated as (the number of packets for business use / the total number of packets) and the ratio of packets for private use is calculated as (the number of packets for private use / the total number of packets). Then, the calculated data is registered in the business and private use ratio DB 61, for example, in a form as shown in Fig. 10. In the example in Fig. 10, an ID column 901, a start time column 902, an end time column 903, a business use ratio column 904, and a private use ratio column 905 are provided. As for a record with the user ID of USER-3, it extracts data of the start time and the end time from the data shown in Fig. 9, extracts data of logs with the user ID of USER-3 in that time period from Fig. 6B, and adds the numbers of packets. In the case of Fig. 6B, the total number of packets is fifty. In addition, it extracts data on logs with the user ID of USER-3 in the identical time period from the Fig. 7B and adds the numbers of packets. In the case of Fig. 7B, the number of packets for business use is ten. Therefore, the number of packets for private use is forty (= 50 - 10) . The business use ratio is 20% (= 0.2 = 10/50) and the private use ratio is 80% 0 (= 0 . 8 = 40/50) . Incidentally, a record of the business and private use ratios in Fig. 10 is provided for each call (each connection from the start of the communication to the end of the communication).

Moreover, the totaling server 55 acquires data concerning a pair of an ID and a telephone number from the user DB 58 (step S17). In addition, it acquires call details data from a magnetic tape or the like (step S19). The call details data is, for example, data shown in Fig. 11. Fig. 11 includes a telephone number column 1001, a start time column 1002, an end time column 1003, a communication time column 1004, and a communication charge column 1005. Respective records of the call details data are generated for every call. As for a communication carrier dedicated for data communication, records corresponding to the respective records of the call details data are always present in the business and private use ratio DB 61. However, when a voice call and data communication are mixed, records corresponding to the records of the call details data are not always present in the business and private use ratio DB 61. In that case, the records are narrowed down with a telephone number of destination person as a telephone number of the access point of the ASP center 5. The same is applied to a case where not only a voice call but also data communication is carried out via an access point other than the ASP center 5.

Then, the totaling server 55 associates the respective records of the call details data and the respective records of the business and private use ratio DB 61 using data from the user DB 58, divides a communication charge on the basis of the business use ratio and the private use ratio in proportion, generates use details data, and registers the use details data in the use details data storage 57 (step S21). Because the data on a pair of an ID and a telephone number has already been acquired from the user DB 58 in the step S17, a user ID is identified according to telephone numbers of the respective records in call details data. Moreover, it is possible to judge which record of the business and private use ratio DB 61 corresponds to the record in the call details data according to the data concerning the start time and end time. Therefore, it is possible to divide communication charges of the respective records in the call details data according to the business use ratios and private use ratios in corresponding records in the business and private use ratio DB 61. For example, a record in a third line in Fig. 11 corresponds to a record in a third line in Fig. 10. 400 yen in a communication charge of 2000 yen is calculated as a communication charge for business use from the business use ratio (20%). Similarly, 1600 yen of a communication charge of 2000 yen is calculated as a communication charge for private use from the private use ratio (80%). Such data is registered in the use details data storage 57. Fig. 12 shows an example of data stored in the use details data storage 57. In the example in Fig. 12, a telephone number column 1101, a start time column 1102, an end time column 1103, a communication time column 1104, a communication charge column 1105, a column 1106 for the charge for business use, and a column 1107 for the charge for private use are provided Although not described here, a result obtained by totaling data for respective users, data concerning the business use ratios and private use ratios for respective connections, or data concerning an averaged business use ratio and averaged private use ratio for the respective users may be included in the table. Besides, statistic processing may be carried out to include a result of the statistic processing in the table.

In this way, the data stored in the use details data is provided to a person in charge on the company side, for example, through the company network 7 or while being stored in a magnetic tape or a disk. Consequently, the person in charge on the company side can understand how frequently facilities are used for private use and how frequently facilities are used for business use from the view point of charges. In some cases, it becomes possible to bill respective employees for the charge for private use. When a large amount of statistic data is included in the use details data, it becomes possible to provide guidance for the employees to reduce expenses or carry out a setting for a new network by using the statistic data.

One embodiment of the invention has been explained. However, the invention is not limited to this embodiment. For example, the respective computers in the ASP center 5 may be configured so as to function by plural computers, not by one computer. In addition, the connection relationship and the installation of the computers in the ASP center 5 described above are mere examples. Other configurations may be adopted as long as the same functions are realized.

Moreover, for example, as for the charging log and the like, only the portions related to this embodiment are described. Actually, a larger amount of data is registered as the charging log and the like. The same can be applied to data stored in other databases and the like.

Furthermore, the embodiment has been explained on the basis of the number of packets. However, the calculations may be performed on the basis of an amount of data (= an amount of data per one packet x the number of packets).

## Claims

1. A communication charge dividing method for dividing communication charges into a communication charge for business use and a communication charge for private use, comprising:
a step of counting a first number of packets, which is a number of packets regarded as packets for business use and packets for private use for a specific user, and storing said first number of packets in a storage device;
a step of counting a second number of packets, which is a number of packets regarded as packets for business use for said specific user, and storing said second number of packets in said storage device;
a ratio calculation step of calculating at least one of a ratio of packets for business use and a ratio of packets for private use based on said first number of packets and said second number of packets, and storing a calculation result in said storage device; and
a charge calculation step of calculating at least one of a communication charge for business use and a communication charge for private use based on at least one of the calculated ratio of packets for business use and the calculated ratio of packets for private use and data concerning a communication charge for said specific user and storing a result of the calculation in said storage device.

2. The communication charge dividing method as set forth in claim 1, wherein a communication charge for said specific user is determined according to time from start of communication to end of said communication.

3. The communication charge dividing method as set forth in claim 1, wherein said first number of packets is a number of packets for said specific user in a communication path through which both said packets regarded as packets for business use and said packets regarded as packets for private use pass, and said second number of packets is a number of packets for said specific user in a communication path through which only said packets regarded as packets for business use pass.

4. The communication charge dividing method as set forth in claim 1, further comprising:
a step of associating said first number of packets and a user ID by using an IP address on a user side and time data, which are stored in said storage device in association with said first number of packets, and time data, an IP address on said user side and a user ID, which are included in charging logs generated at time of connection and at time of disconnection; and
a step of associating said second number of packets and said user ID by using an IP address on said user side and time data, which are stored in said storage device in association with said second number of packets, and said time data, said IP address on said user side and said user ID, which are included in said charging logs.

5. The communication charge dividing method as set forth in claim 1, further comprising:
a step of acquiring data on a communication charge by each telephone number; and
a step of associating said data on said communication charge with a user ID by using user information including a telephone number and said user ID and said data on said communication charge by each said telephone number.

6. The communication charge dividing method as set forth in claim 1, wherein said ratio calculation step comprises:
a step of totaling said first number of packets for said specific user during a specific connection time from connection to disconnection;
a step of totaling said second number of packets for said specific user during said specific connection time from said connection to said disconnection; and
a step of calculating, for every connection time, at least one of a ratio of packets for business use and a ratio of packets for private use by using the totaled first number of packets and the totaled second number of packets.

7. The communication charge dividing method as set forth in claim 6, wherein said charge calculation step comprise:
a step of acquiring data on a communication charge for every specific connection time from connection to disconnection and for each specific user; and
a step of calculating at least one of a communication charge for business use and a communication charge for private use based on at least either said ratio of packets for business use or said ratio of packets for private use, which corresponds to said specific connection time and said specific user, and said data on said communication charge.

8. A program for dividing communication charges into a communication charge for business use and a communication charge for private use, said program causing a computer to execute:
a step of counting a first number of packets, which is a number of packets regarded as packets for business use and packets for private use for a specific user, and storing said first number of packets in a storage device;
a step of counting a second number of packets, which is a number of packets regarded as packets for business use for said specific user, and storing said second number of packets in said storage device;
a step of calculating at least one of a ratio of packets for business use and a ratio of packets for private use based on said first number of packets and said second number of packets, and storing a calculation result in said storage device; and
a step of calculating at least one of a communication charge for business use and a communication charge for private use based on at least one of the calculated ratio of packets for business use and the calculated ratio of packets for private use and data concerning a communication charge for said specific user and storing a result of the calculation in said storage device.

9. A storage medium storing the program as set forth in claim 8.

10. A communication charge dividing apparatus, comprising:
a first packet counter that counts a first number of packets, which is a number of packets for a specific user in a communication path through which both packets regarded as packets for business use and packets regarded as packets for private use pass;
a second packet counter that counts a second number of packets, which is a number of packets for said specific user in a communication path through which only said packets regarded as packets for business use pass;
means for calculating at least one of a ratio of packets for business use and a ratio of packets for private use based on said first number of packets and said second number of packets; and
means for calculating at least one of a communication charge for business use and a communication charge for private use based on at least one of the calculated ratio of packets for business use and the calculated ratio of packets for private use and data concerning a communication charge for said specific user.
